(19) **Europäisches Patentamt**

**European Patent Office**

**Office européen des brevets**

(11) **EP 0 694 784 B1**

(12) **EUROPEAN PATENT SPECIFICATION**

(45) Date of publication and mention
of the grant of the patent:
**27.02.2002 Bulletin 2002/09**

(51) Int Cl.7: **G01N 35/10**, G01F 23/26

(21) Application number: **95111778.7**

(22) Date of filing: **26.07.1995**

(54) **Liquid sampling apparatus**

Probensammler für flüssige Proben

Collecteur d'échantillons liquides

(84) Designated Contracting States:
**DE FR GB**

(30) Priority: **28.07.1994 JP 17696194**

(43) Date of publication of application:
**31.01.1996 Bulletin 1996/05**

(73) Proprietor: **Hitachi, Ltd.**
**Chiyoda-ku, Tokyo (JP)**

(72) Inventors:
• **Suda, Koji**
**2-chome, Tokushima-shi, Tokushima-ken (JP)**
• **Tao, Ryuji**
**Hitachinaka-shi, Ibaraki-ken (JP)**
• **Arima, Norikazu**
**Hitachinaka-shi, Ibaraki-ken (JP)**

(74) Representative: **Altenburg, Udo, Dipl.-Phys. et al**
**Patent- und Rechtsanwälte Bardehle .**
**Pagenberg . Dost . Altenburg . Geissler .**
**Isenbruck Postfach 86 06 20**
**81633 München (DE)**

(56) References cited:
EP-A- 0 526 210    WO-A-88/10412
JP-A- 5 306 973    US-A- 4 818 492
US-A- 4 875 497    US-A- 5 265 482

• PATENT ABSTRACTS OF JAPAN, unexamined
applications, P field, vol. 17, no. 149, March 24,
1993 THE PATENT OFFICE JAPANESE
GOVERNMENT page 1509 P 80; & JP-A-04 319
624 (OLYMPUS OPTICAL CO LTD)
• PATENT ABSTRACTS OF JAPAN vol. 018, no.
117 (P-1699) 24 February 1994 & JP 05 306 973 A
(OLYMPUS OPTICAL CO LTD) 19 November
1993

**Description**

BACKGROUND OF THE INVENTION

The present invention relates to a liquid sampling apparatus for sampling a liquid sample contained in a vessel, and more particularly to a liquid sampling apparatus for use with an automatic analyzer for sampling a liquid sample.

In an automatic analyzer which automatically executes an analysis on a liquid sample, the analysis is generally carried out by the steps of introducing the liquid sample into the automatic analyzer, reacting the liquid sample with a reagent, making required measurements, and discharging the liquid sample. In these steps, it is necessary to quantitatively collect the liquid sample for correct measurements. This collection is referred to as the sampling.

The sampling of a liquid sample is performed by immersing a suction nozzle into the liquid sample in a vessel and driving a suction pump to suck the liquid sample into the nozzle. Then, the nozzle containing the sucked liquid sample is immersed in a reactive liquid, such that the liquid sample in the nozzle is discharged into the reactive liquid by a syringe or the like.

In these steps, it is important to immerse the nozzle in a liquid sample only by the shortest possible length. This is because the immersion of the nozzle into a liquid sample by a length more than necessary causes the liquid sample to attach onto the outer surface of the nozzle. The liquid sample attached on the outer surface of the nozzle will be mixed in a reactive liquid together with the liquid sample sucked into the nozzle, so that an amount of the liquid sample more than a predefined amount is added to the reactive liquid in consequence. Since addition of an amount more than necessary of the liquid sample to the reactive liquid causes erroneous measurements, it is essential for deriving highly accurate measurement results to detect the surface of the liquid sample in the vessel in order to immerse a minimally necessary length of the nozzle into the liquid sample.

An alternative method has also been employed to spout out a liquid sample sucked in a nozzle into a reactive liquid with the aid of air or the like. Although this method does not require the nozzle to be immersed in the reactive liquid, so that the liquid sample attached on the outer surface of the nozzle appears to exert no influence on the reactive liquid, the liquid sample attached on the outer surface may possibly drop into the reactive liquid. In addition, since it is difficult to completely spout out the sucked liquid sample from the nozzle, this method may also suffer from erroneous measurements.

From the reasons mentioned above, in the step of sucking the liquid sample into the suction nozzle, immersion of the nozzle in the liquid sample must be limited to the minimally necessary length, and detection be made when the tip of the suction nozzle reaches the surface of the liquid sample.

As an approach to carry out the detection of the surface of a liquid sample, the electrical conductivity of a liquid under analysis (liquid sample) is utilized for the detection. More specifically, a pair of electrodes associated with a suction nozzle are inserted into a liquid sample vessel and moved vertically relative to the surface of the liquid sample. When the pair of electrodes are brought into contact with the surface of the liquid sample, the electrical conductivity of the liquid sample causes electrical conduction between the pair of electrodes. The surface of the liquid sample can be detected by sensing this electrical conduction.

There is also a method of utilizing an electrostatic capacitance for detecting an immersed condition of a suction nozzle in a liquid sample. In this method, a sample vessel (or its canister) and a suction nozzle are respectively formed of a conductive material such that they are employed as a pair of electrodes. When the suction nozzle is brought into contact with the surface of the liquid sample, an electrostatic capacitance changes between the suction nozzle serving as an electrode and the sample vessel serving as the other electrode. The arrival of the suction nozzle at the surface of the liquid sample is detected by sensing this change in electrostatic capacitance.

In a surface detecting apparatus disclosed in JP-A-4-319624, a sample vessel is disposed between a pair of opposite electrodes. Then, a grounded conductive suction nozzle is inserted into the sample vessel and moved vertically relative to the surface of the liquid sample. In this event, when the tip of the suction nozzle gets into contact with the surface, an electrostatic capacitance between the pair of electrodes changes. The arrival of the suction nozzle at the surface of the liquid sample is detected by sensing this change in electrostatic capacitance.

JP-A-63-109330 discloses another method of detecting the arrival of the tip of a suction nozzle at the surface of a liquid sample by blowing or sucking air from or into a nozzle to sense a change in pressure within the nozzle.

SUMMARY OF THE INVENTION

In an automatic analyzer, a precise analysis of a liquid sample is difficult unless an appropriate amount of liquid sample is sampled.

In the sampling and analysis, erroneous sampling may be relatively easily detected if a liquid sample is such one that is extracted from a living creature and is subjected to, for example, a quantitative analysis for revealing a quantity of a substance which may generally exist within the liquid sample, such as protein or the like, in the extracted liquid sample. Stated another way, if the content of protein in the liquid sample is determined to be zero as a result of the analysis, this is an impossible condition, so that the occurrence of erroneous sampling will be easily determined by an analyst or the like. Thus, the analysis will be again performed for a correct result.

However, if an object to be analyzed is such one that is not generally included in a sample extracted form a living creature like virus, erroneous sampling is difficult to detect.

In other words, even if a liquid sample is determined to include no virus as a result of an analysis made for the liquid sample, an analyst or the like will find it difficult to judge whether or not the result is due to erroneous sampling.

It is therefore an object of the present invention to provide a liquid sampling apparatus which is capable of determining whether or not an appropriate amount of a liquid sample is sampled.

To achieve the above object, a liquid sampling apparatus is provided with the features of the invention as defined in claim 1.

In the liquid sampling apparatus, the liquid amount detecting means includes a first electrode and a second electrode disposed opposite to each other, and electrostatic capacitance measuring means for detecting an electrostatic capacitance between the first and second electrodes as a changing amount signal, wherein the sample vessel is disposed between the first and second electrodes.

Preferably, in the liquid sampling apparatus, the abnormal sampling detecting means compares the changing amount signal generated by the liquid amount detecting means before the liquid sample is sampled by the liquid sampling means with a predetermined changing amount signal to also detect whether or not a liquid is contained in the sample vessel.

Preferably the liquid sample is blood, blood serum, or a mixed liquid of a sample and a predetermined reagent.

The state of the art comprises liquid amount detecting means which can be considered in this context.

In PAJ, vol. 18, no. 117, corresponding to JP-A-05306973, a device is disclosed which is capable of recognizing the occurrence of an abnormal dispensed quantity. However, the dispensing tips used in that device do not relate to the liquid surface detection, which is executed by a movable liquid level sensor before and after the absorption of the liquid by using the dispensing tips. The liquid surface is detected by using ultrasonic or optical distance measurement methods, and the whole operation is quite different basically and sequentially from that of the invention. While a storage means may be used in the known device, no storage means for the signal generated by the detecting means of the invention is provided.

In EP-A 0 526 210, there is disclosed a sampling apparatus where, during the absorption action of a pipette moved toward the liquid surface, a bubble in the reagent container can be detected by detecting the change of the liquid surface level. One electrode is a stand positioned at the lower side of a container, and the other electrode is the pipette. Therefore, the pipette cannot detect the liquid surface if it is separated from said surface.

In US-A 4,898,072, there is disclosed a liquid surface sensor using electrostatic capacitance. The sample container operates as one electrode, and the pipetting tube as the other electrode. If said tube is separated from the liquid surface, no detection output can be obtained.

The invention, however, is clearly distinguished from these known devices.

The liquid amount detecting means generates the changing amount signal which changes corresponding to an amount of liquid contained in the sample vessel, and the generated changing amount signal is stored in the storage means. When the liquid sampling means samples the liquid sample in the vessel and is then moved upward away from the surface of the liquid sample, the abnormal sampling detecting means compares a stored changing amount signal with a changing amount signal generated after the liquid sample was sampled to determine whether or not the liquid sampling means has sampled a predetermined amount or more of the liquid sample based on whether the difference between the two changing amount signals is equal to or more than a predetermined value. In this way, it is possible to correctly detect whether or not the liquid sampling means has sampled a predetermined amount or more of the liquid sample.

When the liquid sampling means is brought into contact with the surface of the liquid sample in the sample vessel, the changing amount signal corresponding to the amount of the liquid sample in the vessel varies from a value presented before the liquid sampling means is brought into contact with the surface. Taking advantage of this phenomenon, the liquid sampling apparatus further comprises surface detecting means for detecting from a change in the changing amount signal that the liquid sampling means has been brought into contact with the surface of the liquid sample.

The provision of the surface detecting means enables the liquid sampling apparatus to detect that the liquid sampling means has reached the surface of the liquid sample as well as to correctly detect whether or not the liquid sampling means has sampled a predetermined amount or more of the liquid sample.

The changing amount signal represents an electrostatic capacitance, and the sample vessel is disposed between first and second electrodes opposite to each other. The liquid sampling means is a nozzle made of a conductive material, and is electrically connected to either of the first and second electrodes. In this state, an electrostatic capacitance corresponding to a liquid sample contained in the sample vessel is detected and stored in the storage means.

When the nozzle made of a conductive material is brought into contact with the surface of the liquid sample in the sample vessel, an electrostatic capacitance between the first and second electrodes, with a space therebetween filled with air, is substantially infinite, resulting in an abrupt increase in the electrostatic capacitance between the first and second electrodes.

Thus, the nozzle brought into contact with the surface of the liquid sample can be sensed by monitoring the electrostatic capacitance between the first and second electrodes to detect an abrupt increase in the electrostatic capacitance.

When the nozzle is moved away from the surface of the liquid sample after sampling the liquid sample, the abnormal sampling detecting means compares the stored electrostatic capacitance value with an electrostatic capacitance value detected after the liquid sample was sampled, and determines whether or not the nozzle has sampled a predetermined amount or more of the liquid sample based on whether or not the result of the comparison shows a difference equal to or more than a predetermined value.

In this way, the liquid sampling apparatus of the present invention can correctly detect whether or not the nozzle has sampled a predetermined amount or more of the liquid sample.

BRIEF DESCRIPTION OF THE DRAWINGS

Fig. 1 is a schematic diagram showing the configuration of a liquid sampling apparatus according to the present invention;

Fig. 2 is a schematic circuit diagram showing in detail a surface detection/abnormal suction detection unit in the embodiment of Fig. 1;

Fig. 3 is a flow chart representing a sequence of operations executed by the embodiment of Fig. 1;

Fig. 4 is a graph representing the relationship between the surface of a liquid sample in a sample vessel and the value of electrostatic capacitance between opposite electrodes in the embodiment of Fig. 1;

Fig. 5 is a graph representing the relationship between the position of a nozzle relative to the surface of the liquid sample in the sample vessel and the value of electrostatic capacitance between the opposite electrodes in the embodiment of Fig. 1;

Fig. 6A is a schematic diagram showing a sample vessel sandwiched by a pair of electrodes when a nozzle is positioned at the highest position of the vessel;

Fig. 6B is an equivalent circuit diagram representing electrostatic capacitances of various portions in the configuration illustrated in Fig. 6A;

Fig. 7A is a schematic diagram showing the sample vessel sandwiched by the pair of electrodes when the nozzle is moved downward;

Fig.7B is an equivalent circuit diagram representing electrostatic capacitances of various portions in the configuration illustrated in Fig. 7A;

Fig. 8 shows an example of a sample vessel which may be used in the embodiment of Fig. 1;

Figs. 9A and 9B show an example of electrodes which may be used in the embodiment of Fig. 1; and

Fig. 10 is a schematic diagram showing the whole arrangement of an automatic analyzer to which the present invention is applied.

DESCRIPTION OF THE PREFERRED EMBODIMENTS

An embodiment of the present invention will hereinafter be described with reference to the accompanying drawings.

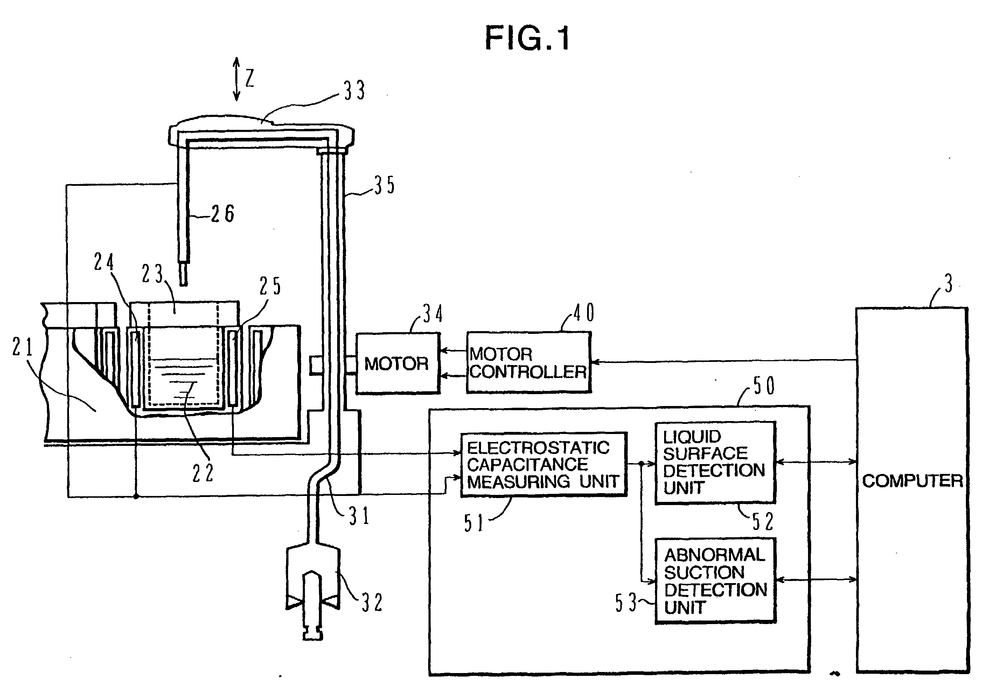

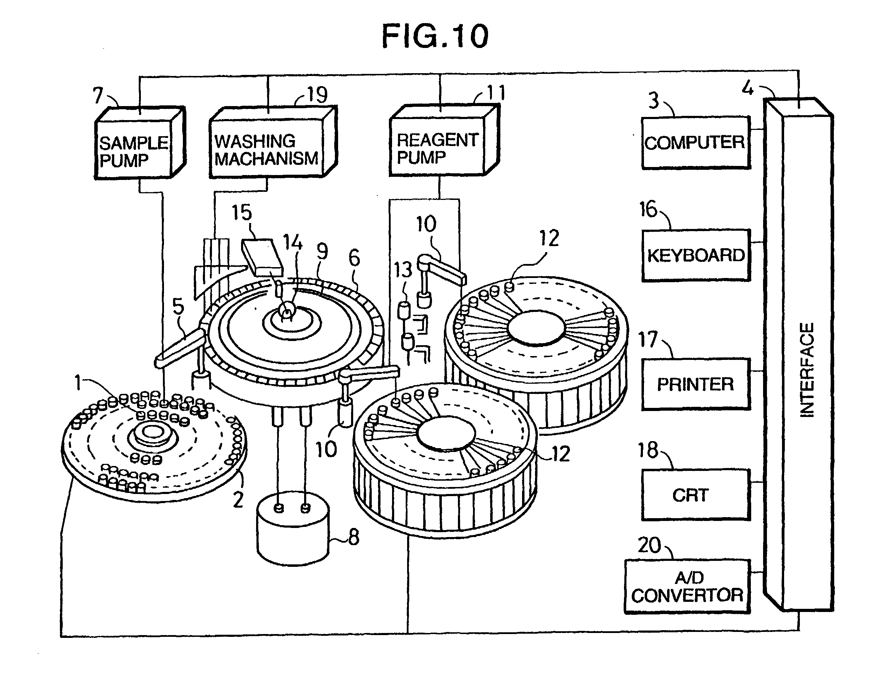

Fig. 1 schematically shows the configuration of a liquid sampling apparatus according to an embodiment of the present invention. In Fig. 1, the present invention is applied, by way of example, to an automatic analyzer. Fig. 10 in turn shows the whole arrangement of the automatic analyzer to which the present invention is applied. First, the automatic analyzer will be described with reference to Fig. 10.

In Fig. 10, a plurality of sample vessels 1, each of which contains a liquid sample such as blood, blood serum, or the like, are arranged on a sample disk 2. The sample disk 2 is rotated under the control of a computer 3 through an interface 4. The sample disk 2 is driven such that the sample vessels 1 are one by one placed under a sample pipetting probe 5 in a previously registered order. From a sample vessel 1 placed under the sample pipetting probe 5, a liquid sample contained therein is sucked by a sample pump 7 coupled to the sample pipetting probe 5 and distributively injected into reactors 6.

The reactors 6, which have received the distributively injected liquid sample, are respectively moved to a first reagent adding position within a reaction disk 9 which communicates with a thermostatic bath 8. Then, each of the reactors 6, after moved to the first reagent adding position, is applied with a first predetermined reagent sucked from a reagent vessel 12 by a reagent pump 11 coupled to a reagent pipetting probe 10. The reactor 6, after applied with the first reagent, is moved to a stirring unit 13, where the liquid sample and the first reagent are stirred in the reactor 6 for the first time.

A light beam emitted from a light source 14 transmits the reactor 6, which has the stirred content, and impinges on a multiple wavelength photometer 15 which detects the absorbance of the content in the reactor 6. An absorbance signal indicative of the detected absorbance is supplied to the computer 3 through an analog-to-digital (A/D) convertor 20 and the interface 4, and translated to a concentration of a substance under measurement in the liquid sample by the computer 3.

After the measurement, the reactors 6 are transferred to a washing mechanism 19 and washed thereby with washing water, after liquids contained therein are exhausted, for the next analysis. The results of the measurements may be printed by a printer 17 or displayed on a screen of a CRT 18. The operator may previously select kinds of measurements to be made to a sample through an input operation from a keyboard 16. The selected kinds of measurements are stored in the computer 3 through the interface 4 such that the computer 3 controls the automatic analyzer to make the requested kinds of measurements for the sample.

Similarly, analysis conditions such as a reagent capacitance, a sample capacitance, a wavelength to be measured, a reaction time, and so on for a certain measurement may be inputted by the operator through the keyboard 16 as analysis parameters, and stored in the computer 3 through the interface 4.

Next, explanation will be given of a liquid sampling apparatus according to the present invention, which can be applied to the automatic analyzer shown in Fig. 10.

In Fig. 1, on a sample disk 21 made of a non-conductive material, there are disposed a sample vessel 23 containing a liquid sample (liquid under analysis) such as blood plasma, blood corpuscle, or the like, and a pair of opposite electrodes 24, 25 which are placed to sandwich the sample vessel 23. These electrodes 24, 25 are positioned in two of plural positioning holes formed in the sample disk 21 for accommodating the sample vessels 23. A nozzle (liquid sampling means) 26 for sampling a liquid sample 22 is inserted into the sample vessel 23. The nozzle 26 is formed of a conductive material.

The electrodes 24, 25 and the nozzle 26 are connected to a electrostatic capacitance measuring unit (liquid amount detecting means) 51 in a surface detection/abnormal suction detection unit 50. An electrostatic capacitance detecting signal from the electrostatic capacitance measuring unit 51 is supplied to a surface detection unit 52 and an abnormal suction detection unit (abnormal sampling detecting means) 53 in the surface detection/abnormal suction detection unit 50. Output signals from the surface detection unit 52 and the abnormal suction detection unit 53 are both supplied to the computer 3.

The nozzle 26 samples the liquid sample 22 in the sample vessel 23 by a sucking operation of a dispenser 32 connected to the nozzle 26 through a tube 31. Also, the nozzle 26 is supported by an elevating arm 33 which is driven by a motor 34 to move in the vertical direction indicated by an arrow z along a stem 35. Thus, the nozzle 26 is moved upward and downward relative to the surface of the liquid sample 22 in the vessel 23 by the action of the elevating arm 33. The motor 34 is controlled based on a control signal from a motor controller 40. The operations of the motor controller 40 and the dispenser 32 are controlled by the computer 3.

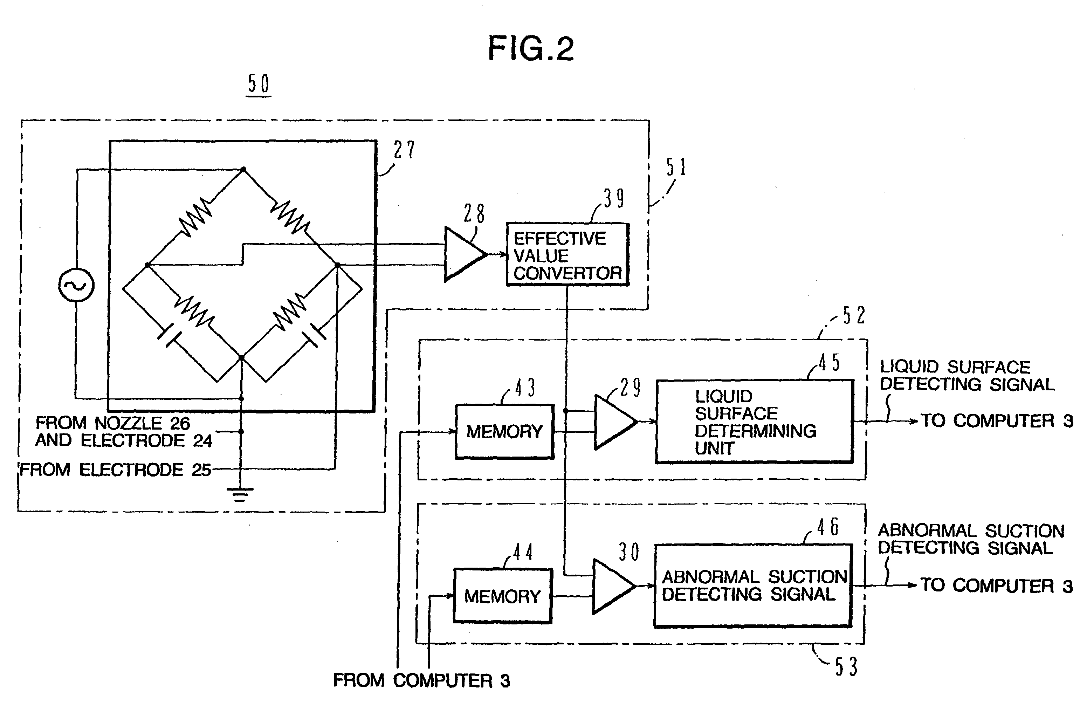

Fig. 2 shows in detail the configuration of the surface detection/abnormal suction detection unit 50.

In Fig. 2, the electrodes 24, 25 and the nozzle 26 are connected to an AC bridge circuit 27, while the electrode 24 and the nozzle 26 are also connected to a zero potential surface. The electrode 25 is also connected to an AC potential surface. A signal from the AC bridge circuit 27 is supplied to a plus input terminal of respective subtracters 29, 30 through an amplifier 28 and an effective value conversion unit 39. A minus input terminal of the subtracter 29 is supplied with an output signal from a memory unit 43, while a minus input terminal of the subtracter 30 is supplied with an output signal from a memory unit 44. The memory units 43, 44 store data supplied from the computer 3.

An output signal from the subtracter 29 is supplied to a surface determining unit 45 which in turn generates a surface detecting signal to the computer 3. An output signal from the subtracter 30 is supplied to an abnormal suction determining unit 46 which generates an abnormal suction signal to the computer 3.

The above-mentioned AC bridge circuit 27, amplifier 28, and effective value conversion unit 39 constitute an electrostatic capacitor measuring unit 51. Also, the memory unit 43, subtracter 29, and surface determining unit 45 constitute the surface detection unit 52, while the memory unit 44, subtracter 30, and abnormal suction determining unit 46 constitute the abnormal suction detection unit 53.

A electrostatic capacitance $C_x$ exists between the nozzle 26 and the electrodes 24, 25. The electrostatic capacitance $C_x$ is measured and converted to a voltage signal by the electrostatic capacitor measuring unit 51.

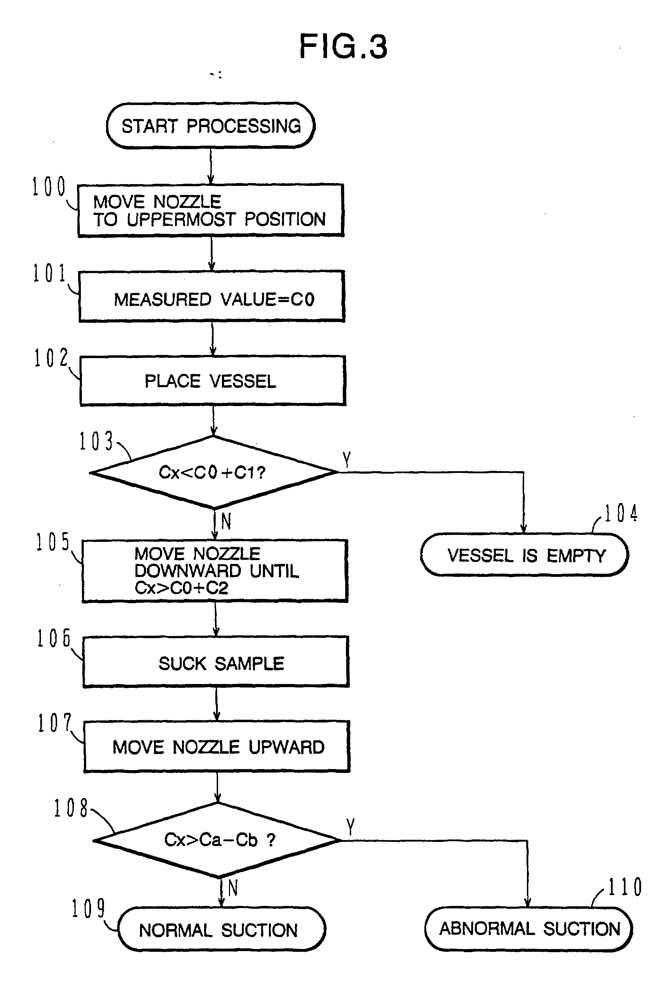

Next, the operation of the embodiment according to the present invention will be explained with reference to a flow chart of Fig. 3.

At step 100 in Fig. 3, a command signal from the computer 3 is supplied to the motor 34 through the motor controller 40 to drive the motor 34 so as to move the nozzle 26 to the highest position of the elevating arm 33. Next, at step 101, an electrostatic capacitance between the electrodes 24 and 25, without the vessel 23 therebetween, is detected by the surface detection/abnormal suction detection unit 50 and stored as an electrostatic capacitance C0 in the memory unit 43. A threshold value C1 is added to this electrostatic capacitance C0 to derive an electrostatic capacitance value Ca (the value of an electrostatic capacitance which is generated when a vessel 23 containing an appropriate amount of liquid sample is disposed between the electrodes 24 and 25) which is stored from the computer 3 to the memory unit 44. It should be noted that the threshold value C1 represents the value of an electrostatic capacitance in a condition that an appropriate amount of liquid sample is contained in the vessel 23 and that the vessel 23 has not yet been disposed between the electrodes 24 and 25.

More specifically, the electrostatic capacitance Cx is measured by the electrostatic capacitance measuring unit 51, and the subtracter 29 in the surface detection unit 52 subtracts an initial value (0) stored in the memory unit 43 from the electrostatic capacitance value Cx. The resulting difference is supplied to the computer 3 through the surface determining unit 45. The computer 3 stores the supplied electrostatic capacitance value Cx into the memory unit 43 as the electrostatic capacitance value C0, and stores the electrostatic capacitance value Ca into the memory unit 44.

Next, at step 102, the sample vessel 23 is disposed between the electrodes 24 and 25 by a command from the computer 3. Then, the electrostatic capacitance Cx is measured by the electrostatic capacitance measuring unit 51 with the sample vessel 23 sandwiched between the electrodes 24 and 25. The subtracter 30 in the abnormal suction detection unit 53 subtracts the electrostatic capacitance value Ca (=C0+C1) stored in the memory unit 44 from the measured electrostatic capacitance value Cx, and the resulting difference is supplied to the abnormal suction determining unit 46. Then, at step 103, the abnormal suction determining unit 46 determines whether the electrostatic capacitance value Cx is smaller than the value Ca or not. If Cx is smaller than Ca, the flow proceeds to step 104, where the abnormal suction determining unit 46 supplies an abnormal detecting signal to the computer 3, determining that the sample vessel 23 is empty or that an amount of liquid sample contained in the sample vessel 23 is equal to or less than a predetermined amount.

Stated another way, a predetermined amount or more of liquid sample must be contained in the sample vessel 23 before the liquid sample is sucked by the nozzle 26. If Cx<C0+C1 stands, it can be determined that the sample vessel 23 is empty or contains an amount of liquid sample less than the predetermined amount. When the sample vessel 23 contains the predetermined amount or more of liquid sample 22, a signal indicative of the electrostatic capacitance value Cx in this state is supplied from the abnormal suction determining unit 46 to the computer 3 which in turn stores the electrostatic capacitance value in the memory unit 44 as the capacitance value Ca.

Subsequently, the suction nozzle 26 is moved downward by a command of the computer 3. Then, at step 105, the electrostatic capacitance measuring unit 51 measures the electrostatic capacitance Cx. The subtracter 29 subtracts the capacitance value C0 stored in the memory unit 43 from the measured electrostatic capacitance value Cx. The result of the subtraction, i.e., the difference between Cx and C0 is compared with a predetermined threshold value C2 by the surface determining unit 45 to determine whether the difference is larger than the threshold value C2. The nozzle 26 is moved downward until the difference becomes larger than the threshold value C2.

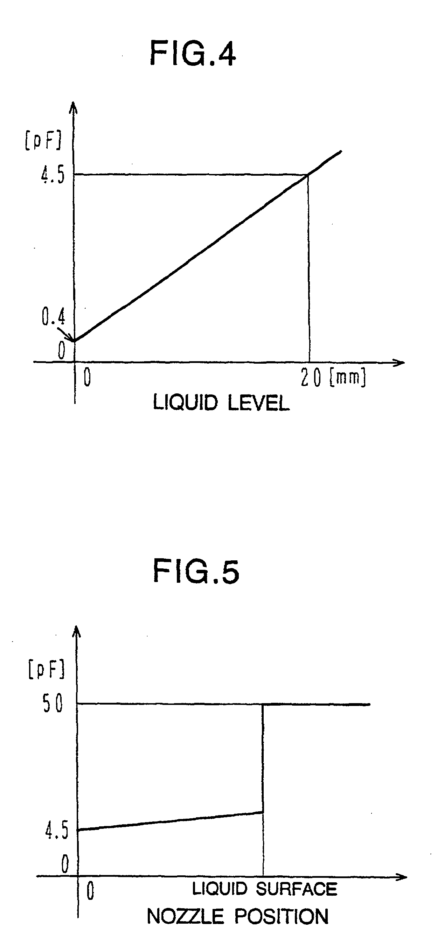

Stated another way, the electrostatic capacitance value Cx varies as shown in Fig. 5 before and after the nozzle 26 is brought into contact with the surface of the liquid sample. More specifically, the electrostatic capacitance Cx abruptly increases at the moment the nozzle 26 is brought into contact with the surface. Thus, the appropriate threshold value C2 is previously set so as to determine that the tip of the nozzle 26 has been brought into contact with the surface of the liquid sample when Cx>C0+C2 stands. When so determined, the surface determining unit 45 supplies the computer 3 with a surface detecting signal.

Next, at step 106, the computer 3, when supplied with the surface detecting signal, commands the motor controller 40 to stop moving the nozzle 26 downward in order for the nozzle 26 to suck the liquid sample. Then, at step 107, the computer 23 again commands the motor controller 40 to move the nozzle 26 upward.

Subsequently, the electrostatic capacitance measuring unit 51 measures the electrostatic capacitance Cx. Next, the subtracter 30 subtracts the electrostatic capacitance value Ca stored in the memory 44 from the measured electrostatic capacitance value Cx. At step 108, the abnormal suction determining unit 46 determines whether or not the electrostatic capacitance value Cx is smaller than Ca-Cb, i.e., whether a predetermined amount of liquid sample has been sucked by the nozzle 26. Cb represents an electrostatic capacitance value which should be derived when the vessel 23 contains a minimally necessary amount of liquid sample which permits the nozzle 26 to suck the liquid sample. Therefore, Ca-Cb represents an electrostatic capacitance between the electrodes 24 and 25 after the predetermined amount of liquid sample has been sucked by the nozzle 26.

If an amount of the liquid sample 22 equal to or more than the predetermined amount has been sucked by the nozzle 26, Cx≤Ca-Cb stands, whereby it is determined at step 109 that the nozzle 26 has normally sucked the liquid sample 22. On the contrary, if the predetermined amount or more of the liquid sample 22 has not been sucked by the nozzle 26, Cx>Ca-Cb stands, whereby the abnormal suction determining unit 46 determines abnormal suction at step 110, and supplies an abnormal suction signal to the computer 3. In this event, the computer 3 determines that some erroneous operation has prevented the nozzle 26 from sucking the predetermined amount of the liquid sample, stops the sampling of the liquid sample, and displays information indicative of "abnormal suction" by a proper display means such as the CRT 18 or the like in order to draw attention of the operator.

In addition, "abnormal suction" can be indicated for a sample which was not sucked by the predetermined amount, when the analysis results are to be printed on paper by a printer.

Next, changes in electrostatic capacitance when an amount of liquid sample in a vessel is increased or decreased and when the tip of the nozzle is brought into contact with the surface of the liquid sample will be explained with reference to Figs. 4 - 7. It is assumed herein for simplicity that the inner and outer shapes of the vessel are both of rectangular solids, and a pair of electrodes are plane and have the shape equal to that of their respective opposite surfaces of the vessel.

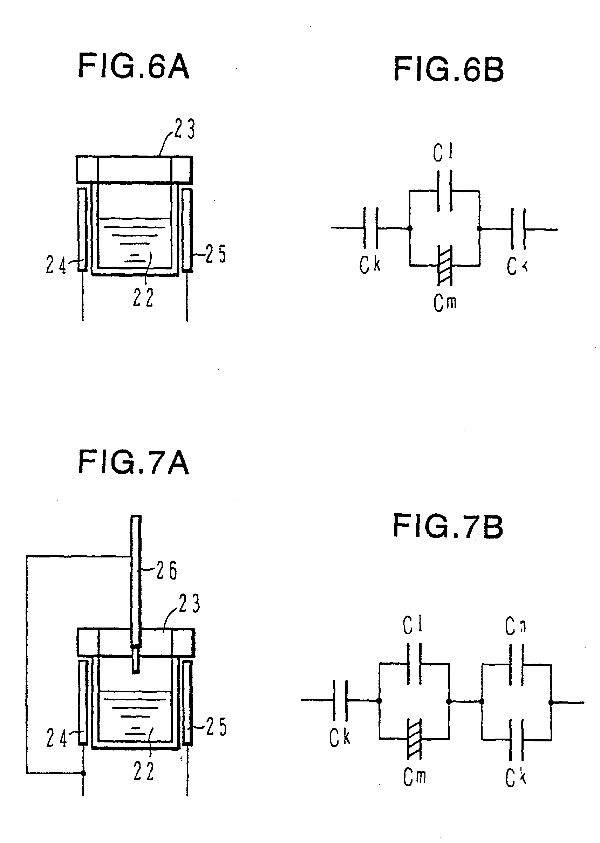

First, when a predetermined amount of liquid sample is contained in the sample vessel 23 and the nozzle 26 is located sufficiently far from the electrodes 24, 25 so as not to exert any influence thereto, i.e., when a condition shown in Fig. 6A is present, an equivalent circuit between the electrodes 24, 25 may be represented as shown in Fig. 6B, in which the electrostatic capacitance Cx is expressed by the following equation (1):

$$Cx=(Ck(Cl+Cm)/(2(Cl+Cm)+Ck) \tag{1}$$

where Ck is the value of a electrostatic capacitance between the outer surface of the sample vessel 23 and the electrode 24 or 25 opposite to the outer surface of the sample vessel 23; Cl is the value of a electrostatic capacitance between the electrodes 24 and 25 which sandwich a portion of the sample vessel 23 filled with air; and Cm is the value of a electrostatic capacitance between the electrodes 24 and 25 which sandwich a portion of the sample vessel 23 filled with the liquid sample, and $C1/\in 0+Cm/\in 1$ = constant is satisfied where $\in 0$ and $\in 1$ are dielectric coefficients of air and liquid sample, respectively.

Fig. 4 shows the relationship between the level of the liquid sample and the electrostatic capacitance between the electrodes, where the ordinate represents the value of the electrostatic capacitance between the electrodes, and the abscissa represents the level of the liquid sample. It can be seen from Fig. 4 that a change in liquid amount in the vessel causes the electrostatic capacitances Cl and Cm to vary, resulting in a change in the electrostatic capacitance Cx between the electrodes. Stated another way, the electrostatic capacitance Cx increases in proportion to an increase in the level of the liquid sample.

Referring next to Figs. 7A and 7B, when the nozzle 26 is moved downward as shown in Fig. 7A, an equivalent circuit between the electrodes 24 and 25 may be represented by Fig. 7B, where the electrostatic capacitance Cx is expressed by the following equation (2):

$$Cx=(Ck(Cl+Cm)(Ck+Cn))/(Ck(Cl+Cm)+(Ck+Cn)(Ck+Cl+Cm)) \tag{2}$$

where Cn is the value of a electrostatic capacitance between the nozzle and the electrode 25 with a space therebetween filled with air.

When the tip of the nozzle 26 is brought into contact with the surface of the liquid sample, Cn increases to infinite ($Cn\rightarrow\infty$), so that the electrostatic capacitance value Cx in this state is expressed by the following equation (3):

$$Cx=Ck(Cl+Cm)/(Ck+Cl+Cm) \tag{3}$$

Fig. 5 is a graph showing a change in the electrostatic capacitance between the electrodes 24 and 25 when the tip of the nozzle 26 is brought into contact with the surface of the liquid sample, wherein the ordinate represents the electrostatic capacitance and the abscissa represents the position of the nozzle which is moved downward relative to the surface. As can be seen from Fig. 5 and as represented by the equations (2) and (3), as the tip of the nozzle 26 reaches the surface of the liquid sample, the electrostatic capacitance presents an abrupt and large increase.

In this way, by detecting an abrupt increase of the electrostatic capacitance between the electrodes 24 and 25, the tip of the nozzle 26 is detected to have reached the surface of the liquid sample.

As described above, according to the embodiment of the present invention, an electrostatic capacitance between the electrodes sandwiching the vessel containing the liquid sample is first measured and stored before the nozzle is driven to suck the liquid sample therefrom. Next, by detecting an abrupt change in the electrostatic capacitance occurring in the sample vessel, the tip of nozzle is determined to have reached the surface of the liquid sample. Then, an electrostatic capacitance value between the electrodes after the liquid sample was sucked is compared with the stored electrostatic capacitance value, which had been measured before the liquid sample was sucked, to determine whether or not a predetermined amount of the liquid sample has been sucked by the nozzle. With this sequence of operations, the liquid sampling apparatus can detect the arrival of the tip of suction nozzle at the surface of the liquid sample as well as detect whether or not the nozzle has sucked exactly the predetermined amount of the liquid sample.

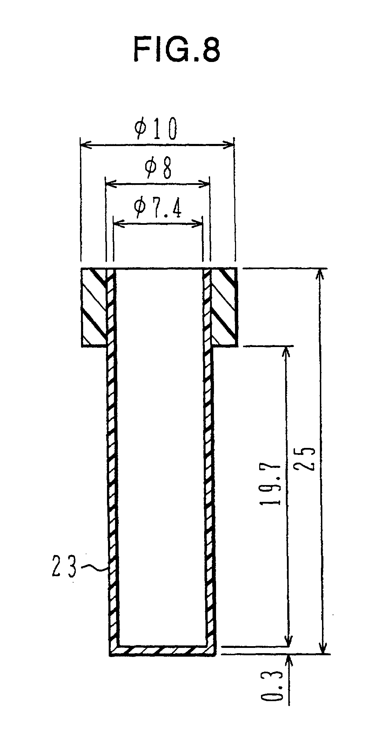

Next, shapes of the sample vessel and the electrodes desirable for implementing the present invention will be explained with reference to Figs. 8 and 10.

It is understood from the equations (1) and (3) that as the electrostatic capacitance Ck between the outer surface of the sample vessel 23 and the electrode 24 or 25 opposite thereto is larger, a change in amount of the liquid sample in the vessel 23 causes a larger change in the electrostatic capacitance Cx between the electrodes, so that a larger difference in the electrostatic capacitance Cx can be observed before and after the tip of the nozzle is brought into contact with the surface of the liquid sample. That is, it is desirable that the wall of the sample vessel be as thin as possible.

It is also desirable that the pair of electrodes sandwiching the sample vessel is placed as close as possible to the sample vessel or that they are closely contacted thereto. Further, from a viewpoint of more accurate measurements of a change in amount of the liquid sample, it is desirable that the electrodes be shaped so as to cover substantially the entire outer surface of the sample vessel.

Fig. 8 shows an exemplary shape and dimension of the sample vessel 23 created in view of the foregoing aspects.

Fig. 8 shows a cross-sectional view of the sample vessel 23 which is cylindrical and is formed with a jaw around an opening. As illustrated, the sample vessel 23 has a height of 25 mm, an inner diameter of 7.4 mm, an outer diameter of 8 mm, and a wall thickness of 0.3 mm. A length from the bottom to the top of the jaw is 19.7 mm, and the outer diameter of the jaw is 10 mm.

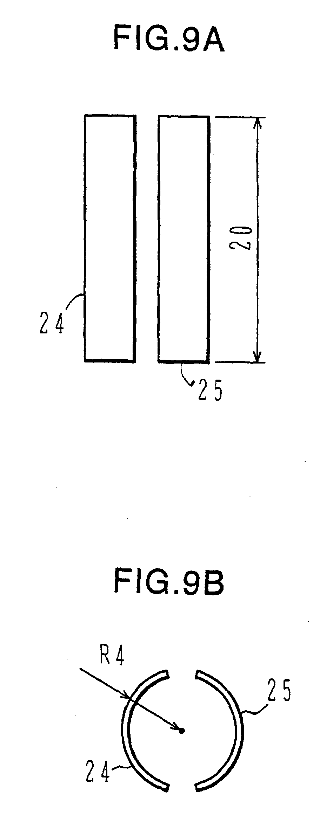

Figs. 9A and 9B show a side view and a top view of an exemplary shape and dimension of the electrodes 24 and 25. As can be seen, the electrodes 24 and 25 are curved so as to cover the cylindrical vessel along the curved wall thereof. The electrodes 24 and 25 have a height of 20 mm and a radius of curvature of 4 mm in the illustrated example.

A material suitable for the sample vessel 23 is resin, and plastic is more preferable.

It should be noted that the graphs illustrated in Figs. 4 and 5 for showing changes in electrostatic capacitance are plotted based on measurements which are made using the sample vessel and the electrodes respectively shown in Figs. 8 and 9.

While the foregoing embodiment has been described for the case where the present invention is applied to an automatic analyzer, the present invention is not limited to such automatic analyzers but may be applied to any other apparatus which performs operations including the sampling of a liquid sample.

In the foregoing embodiment, a detected electrostatic capacitance value is compared with a previously stored electrostatic capacitance value to determine that the tip of a nozzle has been brought into contact with the surface of the liquid sample when the detected electrostatic capacitance value is larger than the stored electrostatic capacitance value. Alternatively, a gradient of the change in the detected electrostatic capacitance value may be calculated to determine that the tip of the nozzle has been brought into contact with the liquid surface when this gradient presents an abrupt increase.

It should be noted that the aforementioned electrostatic capacitance values Cl and Cb are measured using a vessel in a predetermined shape and made of a predetermined material. If a vessel other than the above-mentioned is to be used, its electrostatic capacitance values Cl and Cb may be newly measured and stored.

A liquid sample to be sampled may be one extracted from a living creature such as blood, blood serum, urine, or the like, or other kinds of liquid such as a mixture of a sample and a predetermined reagent.

The liquid sampling apparatus according to present invention, configured as described above, has the following advantages.

The liquid sampling apparatus comprises liquid amount detecting means for detecting a changing amount which changes corresponding to an amount of the liquid sample in the sample vessel and generating a changing amount signal; storage means for storing the generated changing amount signal; and abnormal sampling detecting means for comparing the changing amount signal generated by said liquid amount detecting means before the liquid sample is sampled by the liquid sampling means and stored in the storage means with the changing amount signal generated by the liquid amount detecting means after the liquid sample was sampled by the liquid sampling means to detect whether or not the liquid sampling means has sampled a predetermined amount or more of the liquid sample from the sample vessel.

Thus, the liquid sampling apparatus is capable of correctly detecting whether or not the liquid sampling means has sampled the predetermined amount or more of the liquid sample.

Also, the liquid sampling apparatus detects an electrostatic capacitance corresponding to an amount of a liquid sample in the sample vessel, stores the detected electrostatic capacitance, detect from a change in the detected electrostatic capacitance that a nozzle serving as the liquid sampling means has been brought into contact with the liquid surface, and compares an electrostatic capacitance value detected after the nozzle sampled the liquid with the stored electrostatic capacitance value to detect whether or not the nozzle has sampled the predetermined amount or more of the liquid.

In this way, the liquid sampling apparatus is capable of detecting that the nozzle has reached the surface of a liquid sample, as well as capable of correctly detecting whether or not the nozzle has sampled the predetermined amount or more of the liquid sample.

**Claims**

1. A liquid sampling apparatus including a first and a second electrode (24, 25) and a vessel (23) disposed between said first and second electrodes (24, 25), and an electrically conductive sampling nozzle (26) arranged such that it can be moved upward and downward relative to said vessel (23), said liquid sampling apparatus detecting a surface of liquid sample (22) in said vessel (23) by means of a liquid surface detecting means (52) detecting a capacitance between the first and second electrodes (24, 25), when an end of said sampling nozzle (26) contacts to said surface of said liquid sample (22) in said vessel (23), the apparatus sampling said liquid sample (22) in said vessel (23) by using said sampling nozzle (26),
   **characterized by**

   an electrical connection between said nozzle (26) and either said first or said second electrode;
   liquid amount detecting means (50, 51, 3) arranged to detect a changing amount signal which equals an electrostatic capacitance between said first electrode (24) and said second electrode (25) and which corresponds to an amount of the liquid sample (22) in the sample vessel (23); the liquid amount detecting means being further arranged to detect a first changing amount signal before said sampling nozzle (26) is downwardly moved toward said vessel (23), the liquid amount detecting means (50, 51, 3) being further arranged to detect a second changing amount signal after said liquid sample (22) in said vessel (23) has been sampled by said liquid sampling nozzle (26) and said sampling nozzle (26) has been upwardly moved from said vessel (23), the liquid surface detecting means (52) being arranged to monitor a signal output from said liquid amount detecting means (51, 3) to detect that said sampling nozzle (26) contacts to said surface of said liquid (22) in said vessel (23) after downwardly moving of said sampling nozzle (26) into said vessel (23) on the basis of a change of the measured electrostatic capacitance between said first electrode (24) and said second electrode (25),
   storage means (44) arranged to store the first changing amount signal generated by said liquid amount detecting means (50, 51, 3); and
   abnormal sampling detecting means (53) arranged to compare the stored first changing amount signal with the second changing amount signal to determine whether or not said sampling nozzle (26) has sampled a predetermined amount or more of the liquid sample (22) from the vessel (23).

2. A liquid sampling apparatus according to claim 1, wherein said abnormal sampling detecting means (53) is arranged to compare the changing amount signal generated by said liquid amount detecting means (51) before the liquid sample (22) is sampled by said liquid sampling means (26) with a predetermined changing amount signal to also detect whether or not a liquid is contained in said sample vessel (23).

**Patentansprüche**

1. Probennehmer für flüssige Proben mit einer ersten und zweiten Elektrode (24, 25) und einem Gefäß (23), das zwischen der ersten und der zweiten Elektrode (24, 25) angeordnet ist, und mit einer elektrisch leitenden Probennehmerdüse (26) solcher Anordnung, dass sie relativ zu dem Gefäß (23) auf- und abwärts bewegt werden kann, wobei der Probennehmer eine Oberfläche der flüssigen Probe (22) in dem Gefäß (23) mithilfe einer Oberflächen-Detektiervorrichtung (52) detektiert, die die Kapazität zwischen der ersten Elektrode (24) und der zweiten Elektrode (25) detektiert, wenn ein Ende der Probennehmerdüse (26) die Oberfläche der flüssigen Probe (22) in dem Gefäß (23) berührt, wobei der Probennehmer die flüssige Probe (22) in dem Gefäß (23) unter Verwendung der Probennehmerdüse (26) entnimmt, **gekennzeichnet durch** eine elektrische Verbindung zwischen der Düse (26) und entweder der ersten oder der zweiten Elektrode, eine Flüssigkeitsmengen-Detektiervorrichtung (50, 51, 3) in solcher Anordnung, dass sie ein Mengenänderungssignal detektiert, das gleich der elektrostatischen Kapazität zwischen der ersten Elektrode (24) und der zweiten Elektrode (25) ist, und das einer Menge von flüssiger Probe (22) in dem Probengefäß (23) entspricht, wobei die Flüssigkeitsmengen-Detektiervorrichtung außerdem so angeordnet ist, dass sie ein erstes Mengenänderungssignal detektiert, bevor die Probennehmerdüse (26) nach unten auf das Gefäß (23) zu bewegt wird, und dass die Flüssigkeitsmengen-Detektiervorrichtung (50, 51, 3) weiter so angeordnet ist, dass sie ein zweites Mengenänderungssignal detektiert, nachdem die Flüssigkeitsprobe (22) in dem Gefäß (23) von der Düse (26) entnommen worden ist und die Düse von dem Gefäß (23) nach oben bewegt worden ist, wobei die Detektiervorrichtung für die Flüssigkeitsoberfläche (52) so angeordnet ist, dass sie ein Signal überwacht, das von der Flüssigkeitsmengen-Detektiervorrichtung (51, 3) ausgegeben wird, um zu detektieren, dass die Probennehmerdüse (26) die Oberfläche der Flüssigkeit (22) im Gefäß (23) nach der Abwärtsbewegung der Düse (26) in das Gefäß (23) berührt, auf der Basis einer Änderung der gemessenen elektrostatischen Kapazität zwischen der ersten (24) und der zweiten (25) Elektrode,

eine Speichervorrichtung (44) angeordnet zum Speichern des ersten Mengenänderungssignals, das von der Flüssigkeitsmengen-Detektiervorrichtung (50, 51, 3) erzeugt wird, und

eine Detektiervorrichtung für abnormales Probe-Entnehmen (53) solcher Anordnung, dass sie das gespeicherte erste Mengenänderungssignal mit dem zweiten Mengenänderungssignal vergleicht, um zu bestimmen, ob die Probennehmerdüse (26) eine vorbestimmte Menge oder mehr der flüssigen Probe (22) aus dem Gefäß (23) entnommen hat.

2.  Probennehmer für flüssige Proben nach Anspruch 1, wobei die Vorrichtung (53) zum Detektieren von abnormalem Probennehmen so angeordnet ist, dass sie das Mengenänderungssignal, erzeugt von der Flüssigkeitsmengen-Detektiervorrichtung (51) bevor die flüssige Probe (22) von der Probennahme-Vorrichtung (26) entnommen worden ist, mit einem vorbestimmten Mengenänderungssignal vergleicht, um auch zu detektieren, ob eine Flüssigkeit in dem Probengefäß (23) vorhanden ist oder nicht.

**Revendications**

1.  Dispositif d'échantillonnage de liquide comportant une première et une seconde électrode (24, 25) et un récipient (23) disposé entre lesdites première et seconde électrodes (24, 25), et une buse d'échantillonnage électriquement conductrice (26) agencée de sorte qu'elle peut être déplacée vers le haut et vers le bas par rapport audit récipient (23), ledit dispositif d'échantillonnage de liquide détectant une surface d'un échantillon de liquide (22) dans ledit récipient (23) par l'intermédiaire de moyens de détection de surface de liquide (52) détectant une capacité entre les première et seconde électrodes (24, 25), lorsqu'une extrémité de ladite buse d'échantillonnage (26) vient en contact de ladite surface dudit échantillon de liquide (22) dans ledit récipient (23), le dispositif échantillonnant ledit échantillon de liquide (22) dans ledit récipient (23) en utilisant ladite buse d'échantillonnage (26),
    **caractérisé par** une connexion électrique entre ladite buse (26) et ladite première électrode ou ladite seconde électrode,

    des moyens de détection de quantité de liquide (50, 51, 3) agencés pour détecter un signal de quantité changeante qui est égal à la capacité électrostatique entre ladite première électrode (24) et ladite seconde électrode (25) et qui correspond à une quantité de l'échantillon de liquide (22) dans le récipient d'échantillon (23), les moyens de détection de quantité de liquide étant de plus conçus pour détecter un premier signal de quantité changeante avant que ladite buse d'échantillonnage (26) soit déplacée vers le bas en direction dudit récipient (23), les moyens de détection de quantité de liquide (50, 51, 3) étant de plus conçus pour détecter un second signal de quantité changeante après que ledit échantillon de liquide (22) dans ledit récipient (23) ait été échantillonné par ladite buse d'échantillonnage de liquide (26) et que ladite buse d'échantillonnage (26) ait été déplacée vers le haut depuis ledit récipient (23),
    les moyens de détection de surface de liquide (52) étant conçus pour surveiller un signal émis par lesdits moyens de détection de quantité de liquide (51, 3) pour détecter que ladite buse d'échantillonnage (26) vient en contact de ladite surface dudit liquide (22) dans ledit récipient (23) après un déplacement vers le bas de ladite buse d'échantillonnage (26) dans ledit récipient (23) sur la base d'un changement de la capacité électrostatique mesurée entre ladite première électrode (24) et ladite seconde électrode (25),
    des moyens de mémorisation (44) conçus pour mémoriser le premier signal de quantité changeante généré par lesdits moyens de détection de quantité de liquide (50, 51, 3), et
    des moyens de détection d'échantillonnage anormal (53) conçus pour comparer le premier signal de quantité changeante mémorisé et le second signal de quantité changeante pour déterminer si ladite buse d'échantillonnage (26) a échantillonné ou non une quantité prédéterminée ou une quantité supérieure de l'échantillon de liquide (22) depuis le récipient (23).

2. Dispositif d'échantillonnage de liquide selon la revendication 1, dans lequel lesdits moyens de détection d'échantillonnage anormal (53) sont conçus pour comparer le signal de quantité changeante généré par lesdits moyens de détection de quantité de liquide (51) avant que l'échantillon de liquide (22) soit échantillonné par lesdits moyens d'échantillonnage de liquide (26) et un signal de quantité changeante prédéterminé afin de détecter également si un liquide est contenu ou non dans ledit récipient d'échantillon (23).

FIG.1

COMPUTER 3

MOTOR CONTROLLER 40

MOTOR 34

50

LIQUID SURFACE DETECTION UNIT 52

ABNORMAL SUCTION DETECTION UNIT 53

ELECTROSTATIC CAPACITANCE MEASURING UNIT 51

35

33

26

25

23

24

22

21

31

32

# FIG.2

FROM NOZZLE 26 AND ELECTRODE 24

FROM ELECTRODE 25

EFFECTIVE VALUE CONVERTOR

MEMORY

LIQUID SURFACE DETERMINING UNIT

LIQUID SURFACE DETECTING SIGNAL

TO COMPUTER 3

MEMORY

ABNORMAL SUCTION DETECTING SIGNAL

ABNORMAL SUCTION DETECTING SIGNAL

TO COMPUTER 3

FROM COMPUTER 3

EP 0 694 784 B1

EP 0 694 784 B1

# FIG.3

```
          START PROCESSING

100   MOVE NOZZLE
      TO UPPERMOST POSITION

101   MEASURED VALUE=C0

102   PLACE VESSEL

103   Cx<C0+C1?  ──Y──→  104  VESSEL IS EMPTY
         │N
105   MOVE NOZZLE
      DOWNWARD UNTIL
      Cx>C0+C2

106   SUCK SAMPLE

107   MOVE NOZZLE UPWARD

108   Cx>Ca−Cb ?  ──Y──→  110  ABNORMAL SUCTION
         │N
109   NORMAL SUCTION
```

14

# FIG.4

LIQUID LEVEL

# FIG.5

NOZZLE POSITION

# FIG.6A

# FIG.6B

# FIG.7A

# FIG.7B

# FIG.8

# FIG.9A

# FIG.9B

# FIG.10

EP 0 694 784 B1